(19) Europäisches Patentamt
European Patent Office
Office européen des brevets

(11) **EP 1 083 751 B1**

(12) **EUROPEAN PATENT SPECIFICATION**

(45) Date of publication and mention
of the grant of the patent:
**04.03.2009 Bulletin 2009/10**

(51) Int Cl.:
***H04N 7/50*** *(2006.01)*

(21) Application number: **99830560.1**

(22) Date of filing: **08.09.1999**

(54) **Measurement of activity of video images in the DCT domain**

Messung der Videobildaktivität im DCT-Bereich

Mesure de l'activité d'images vidéo dans le domaine DCT

(84) Designated Contracting States:
**DE FR GB IT**

(43) Date of publication of application:
**14.03.2001 Bulletin 2001/11**

(73) Proprietor: **STMicroelectronics S.r.l.**
**20041 Agrate Brianza (Milano) (IT)**

(72) Inventors:
• **Pau, Danilo**
**20099 Sesto San Giovanni (IT)**
• **Bortot, Luca**
**20147 Milano (IT)**
• **Sacchi, Maria Luisa**
**20129 Milano (IT)**

(74) Representative: **Pellegri, Alberto et al**
**Società Italiana Brevetti S.p.A.**
**Via Avegno, 6**
**21100 Varese (IT)**

(56) References cited:
**EP-A- 0 492 528          EP-A- 0 586 225**
**EP-A- 0 743 793          EP-A- 0 905 981**
**WO-A-96/36182          US-A- 5 699 457**
**US-A- 5 742 344**

• **TAE-YUN CHUNG ET AL: "QUANTIZATION CONTROL FOR IMRPOVEMENT OF IMAGE QUALITY COMPATIBLE WITH MPEG2" IEEE TRANSACTIONS ON CONSUMER ELECTRONICS, US, IEEE INC. NEW YORK, vol. 40, no. 4, 1 November 1994 (1994-11-01), pages 821-825, XP000495820 ISSN: 0098-3063**

**Description**

FIELD OF THE INVENTION

In general the present invention relates to the coding of video sequences and in particular to a method for measuring the activity of a portion of a picture in order to improve the effectiveness of the buffering that is performed during the coding process, specially in low cost applications.

BACKGROUND OF THE INVENTION

The invention is useful in digital video coders where it is necessary to evaluate the activity of a block of information in the frequency domain.

Because of the particular importance of the of the MPEG standard in treating digitized video sequences, to illustrate a practical implementation of the method of the invention, a description of the method implemented within an MPEG2 coding is reported. Obviously, the method of the invention remains perfectly valid and advantageously applicable even in decoders based on different standards (other than MPEG), as they are defined from time to time.

**Description of the MPEG2 video coding**

The MPEG (*Moving Pictures Experts Group*) standard defines a set of algorithms dedicated to the compression of sequences of digitized pictures. These techniques are based on the reduction of the temporal, spatial and statistical redundancy of the information constituting the sequence.

Reduction of spatial and statistical redundancy is achieved by compressing independently the single images, by means of discrete cosine transform (DCT), quantization and variable length Huffman coding.

The reduction of temporal redundancy is obtained using the correlation that exist between successive pictures of a sequence. Approximately, it may be said that each image can be expressed, locally, as a translation of a previous and/or subsequent image of the sequence. To this end, the MPEG standard uses three kinds of pictures, indicated with I (Intra Coded Frame), P (Predicted Frame) and B (Bidirectionally Predicted Frame). The I pictures are coded in a fully independent mode; the P pictures are coded in respect to a preceding I or P picture in the sequence; the B pictures are coded in respect to two pictures, of I or P kind: the preceding one and the following one in the video sequence.

A typical sequence of pictures can be the following one: I B B P B B P B B I B... This is the order in which they will be viewed, but given that any P is coded in respect to the previous I or P, and any B in respect to the preceding and following I or P, it is necessary that the decoder receive the P pictures before the B pictures, and the I pictures before the P pictures. Therefore the order of transmission of the pictures will be I P B B P B B I B B...

Pictures are elaborated by the coder sequentially, in the indicated order, and subsequently sent to a decoder which decodes and reorders them, allowing their subsequent displaying. To codify a B picture it is necessary for the coder to keep in a dedicated memory buffer, called "frame memory", the I and P pictures, coded and thereafter decoded, to which a current B picture referres, thus requiring an appropriate memory capacity.

One of the most important functions in coding is motion estimation. Motion estimation is based on the following consideration: a set of pixels of a picture frame called current pixel set may be placed in a position of the subsequent and/or precedent picture obtained by rigid translation of the corresponding one to the current pixel set. Of course, these transpositions of objects may expose parts that were not visible before as well as changes of their shape (e.g. during a zooming, rotations and the like).

The family of algorithms suitable to identify and associate these portions of pictures is generally referred to as of "motion estimation". Such association of pixels is instrumental to calculate the relative coordinates between the current portion and the portion identified as the best predictor, and to calculate the portion of picture difference, so removing redundant temporal information, thus making more effective the subsequent processes of DCT compression, quantization and entropic coding.

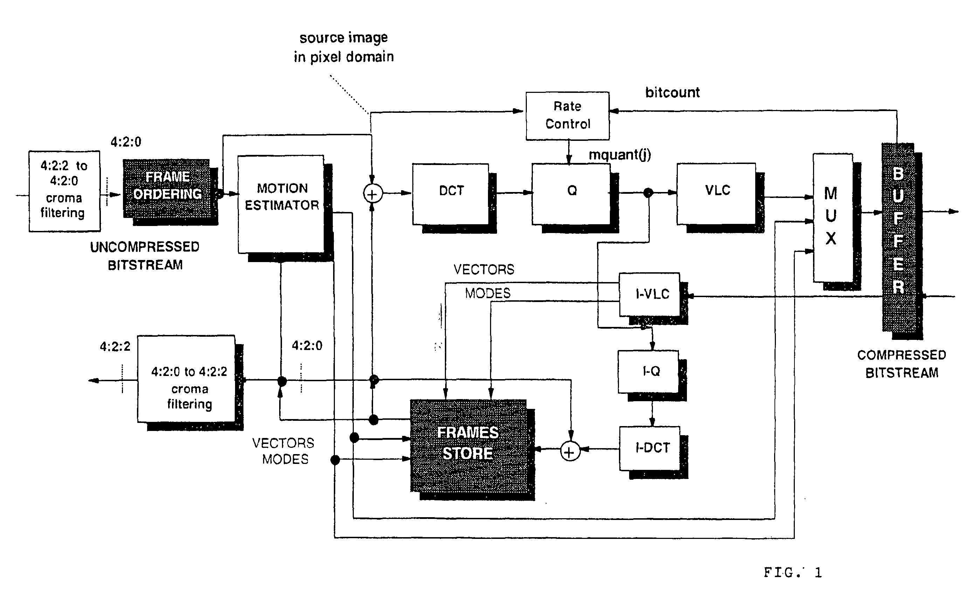

Such a method finds in the standard MPEG-2 a typical example. A typical block diagram of a video MPEG-2 coder is depicted in Fig. 1. Such system is constituted of the following functional blocks:

**1) Chroma filter block from 4:2:2 to 4:2:0**

In this block there is a low pass finite time response filter operating on the chrominance component, which allows the substitution of any pixel with the weighed sum of neighbouring pixels placed on the same column and multiplied by appropriate coefficients. This allows a subsequent subsampling by two, thus obtaining a halved vertical definition of the chrominance.

### 2) Frame ordinator

This blocks is composed of one or several frame memories outputting the frames in the coding order required by the MPEG standard. For example, if the input sequence is I B B P B B P etc., the output order will be I P B B P B B ....

- I (Intra coded picture) is a frame or a half-frame containing temporal redundance;

- P (Predicted-picture) is a frame or a half-frame whose temporal redundance in respect to the preceding I or P (previously co/decoded) has been removed;

- B (Biredictionally predicted-picture) is a frame or a half-frame whose temporal redundance respect to the preceding I and subsequent P (or preceding P and subsequent P, or preceding P and subsequent I) has been removed (in both cases the I and P pictures must be considered as already co/decoded).

Each frame buffer in the format 4:2:0 occupies the following memory amount:

| standard PAL | 720 x 576 x 8 for the luminance (Y) = | 3,317,760 bits |
|---|---|---|
| | 360 x 288 x 8 for the chrominance (U) = | 829,440 bits |
| | 360 x 288 x 8 for the chrominance (V) = | 829,440 bits |
| | total Y + U + V = | 4,976,640 bits |
| standard NTSC | 720 x 480 x 8 for the luminance (Y) = | 2,764,800 bits |
| | 360 x 240 x 8 for the chrominance (U) = | 691,200 bits |
| | 360 x 240 x 8 for the chrominance (V) = | 691,200 bits |
| | total Y + U + V = | 4,147,200 bits |

### 3) Estimator

This is the block able to remove the temporal redundance from the P and B pictures.

### 4) DCT

This is the block that implements the discrete cosine transform according to the MPEG-2 standard.
The I picture and the error pictures P and B are divided in blocks of 8*8 pixels Y, U, V, on which the DCT transform is performed.

### 5) Quantizer Q

An 8*8 block resulting from the DCT transform is then divided by a so-called quantizing matrix (in particular to divide the cosine transformed matrix of the macroblock by the matrix mQuant*Quantizer_Matrix where Quantizer_Matrix is a priori established and can vary from picture to picture) in order to reduce more or less drastically the bit number magnitude of the DCT coefficients. In such case, the information associated to the highest frequencies, less visible to human sight, tends to be removed. The result is reordered and sent to the subsequent block.

### 6) Variable Length Coding (VLC)

The codification words output from the quantizer tend to contain null coefficients in a more or less large number, followed by nonnull values. The null values preceding the first nonnull value are counted and the count figure constitutes the first portion of a codification word, the second portion of which represents the nonnull coefficient.
These pairs tend to assume values more probable than others. The most probable ones are coded with relatively short words (composed of 2, 3 or 4 bits) while the least probable are coded with longer words. Statistically, the number of output bits is less than in the case such a criterion is not implemented.

### 7) Multiplexer and buffer

Data generated by the variable length coder for each macroblock, the motion vectors, the kind of macroblock I/P/B, the mQuant values, the quantizing matrices of each picture and other syntactic elements are assembled for constructing the serial bitstream whose final syntax is fully defined by the MPEG-2 video section standard. The resulting bitstream is stored in a memory buffer, the limit size of which is defined by the MPEG-2 standard requisite that the buffer cannot be overflown, otherwise a loss of information useful in decoding is generated. The quantizer block Q attends to the respect of such a limit, by making more or less drastic the division of the DCT 8*8 blocks depending on how far the system is from the filling or depletion limit of such a memory buffer and *on the energy of the luminance component of the 16*16 source macroblock taken upstream of the motion estimation, of the prediction error generation and DCT transform.*

### 8) Inverse Variable Length Coding (I-VLC)

The variable length coding functions specified above are executed in the inverse order.

### 9) Inverse Quantization (IQ)

The words output by the I-VLC block are reordered in the 8*8 block structure, which is multiplied by the same quantizing matrix used for its previous quantization.

### 10) Inverse DCT (I-DCT)

The DCT transform function is inverted and applied to the 8*8 block output by the inverse quantization process. This permits to pass from the domain of spatial frequencies to the pixel domain.

### 11) Motion Compensation and Storage

At the output of the I-DCT may be present either:

- a decoded I picture (or half-picture) which must be stored in a respective frame memory for removing subsequently the temporal redundancy in respect thereto from successive P and B pictures; or

- a decoded prediction error picture (or half-picture) P or B which must be summed to the information previously removed during the motion estimation phase. In case of a P picture, such a resulting sum, stored in dedicated frame memory is used during the motion estimation process for the successive P pictures and B pictures.

These frame memories are distinct from the memories used for re-arranging the blocks.

### 12) Display Unit from 4:2:0 to 4:2:2

This unit converts the pictures from the format 4:2:0 to the format 4:2:2 and generates the interlaced format for the subsequent displaying. The chrominance components eliminated by means of the functional block 1, are restored by interpolation of the neighbouring pixels. The interpolation consists in a weighed sum of the neighbouring pixels for appropriate coefficients and in limiting between 0 and 255 the value so obtained.

### Compression rate control

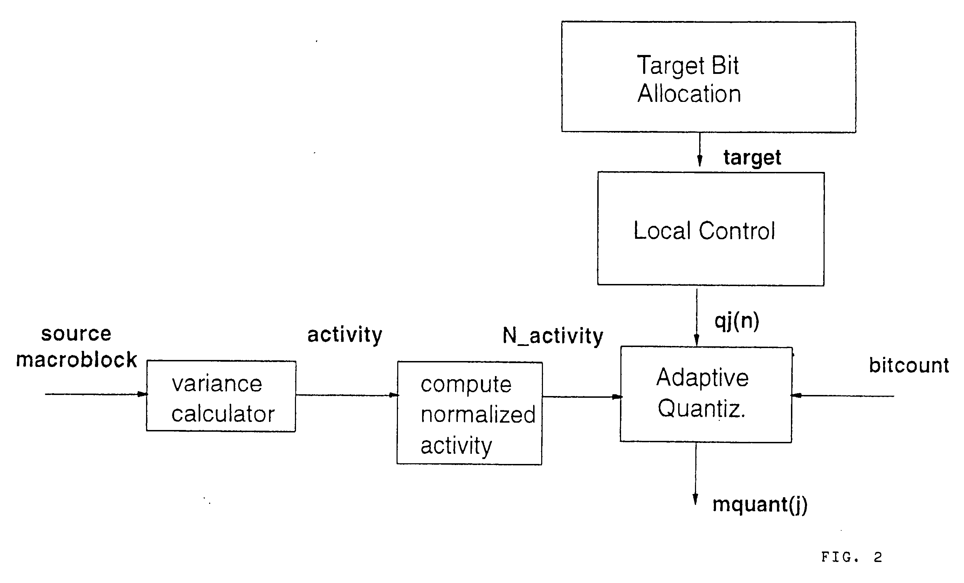

The block named "rate control" of Fig. 1 actually is composed of five blocks, as shown in Fig. 2:

- the first block named *Target Bit Allocation* establishes the number of bits usable for the current picture i (where i = I, P or B). The allocation is done at the beginning of the picture coding considering the complexity measure derived by the past pictures of the same kind;

- the second block named *Local Control* furnishes the filling state of the buffer of Fig. 1 and allows to calculate the control parameter qj(n) for each macroblock before its quantization;

- the third block named *Adaptive Quantization* completes the calculation of the mQuant by multiplying the qj(n) factor by the activity coefficient (N_actj) of a macroblock, in particular it calculates the quantization parameter mQuant=N_actj(n)*qj(n);

- the fourth block named *Variance Calculator* calculates the activity beginning from a macroblock placed on the source picture and thus in the pixel domain, by means of a method based on the variance of a pixel block belonging to the source picture;

- the fifth block named ***Normalized Activity*** calculates the activity normalized rspect to the average activity calculates for the previously coded picture.

Examples of the first, second and third block are described in the patent application EP-98830599.1; an example of the fifth block is described in the patent application EP-97830591.0, both in the name of the same applicant. The implementation of the functioned fifth block was commonly known to practitioners prior to the above indicated patent applications.

### Assumptions about the picture format

Let us consider a picture frame, which is constituted of a pair of half-frames. They are constituted by luminance and chrominance components. Let us suppose, for example, to apply the algorithm for measuring the macroblock activity only on the most energetic component that is the richest of information, as the luminance component.

Let this component be represented as a matrix having N rows and M columns. Let us divide each frame in portions called macroblocks of R rows and S columns. The results of the division N/R and M/S must be two integers, not necessarily equals to each other.

The MPEG2 establishes the dimension R=16 and S=16 which are considered as an example for the method of this patent application.

Let MBq(i,j) be a macroblock belonging to the current frame and subjected to the MPEG2 coding (motion estimation, prediction error calculation, DCT transform, quantization etc.) and whose first pixel, in the top left side, is in the cross-position between the i-th row and j-th column. The pair (i,j) is characterized in that i and j are an integer multiple respectively of R and S.

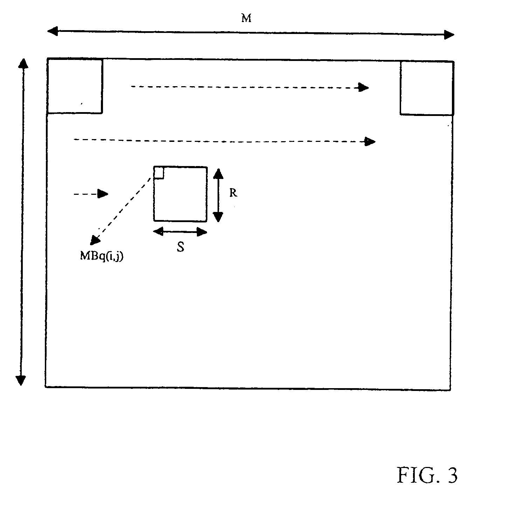

How said macroblock is located on the picture and the dashed horizontal arrows indicating the scanning order used to locate macroblocks, are depicted in figure 3.

Let MBe(i,j) be the prediction error macroblock calculated as a difference between the corresponding pixels of two macroblocks: the first said MBq(i,j) and belonging to the current frame and the second MBp(k,h) resulted as best predictor of MBq at the end of the process of motion estimation and belonging to a precedent and/or future frame or to an average of both of them.

In particular if the current picture is of I kind then MBe(i,j)=MBq(i,j), while if the picture is of P or B kind then Mbe(i,j)=MBq(i,j)-MBp(k,h).

Referring to figure 2 and to the blocks called Adaptive Quantization, Compute Normalized Activity and Variance Calculator, the calculation of the activity and thus of the parameter N_actj in the model proposed by the cited patents is carried out by estimating the variance of the luminance component for each block. The activity of the macroblock is given by the smallest of the activities of eight luminance blocks in which a frame macroblock is decomposable.

The method may be described as follows.

- A given macroblock MBq(i,j) is reorganized in 4 blocks containing frame information and in 4 blocks containing half-frame information;

- for each of the eight blocks, four containing information belonging to both the joined half-frames and four containing information belonging to the disjoined half-frames, the following operations are performed:

- reading of the luminance component (64 coefficients);

- calculating the variance, for example according to method described in a EP-A-97830591.0 or by any other equivalent number;

- calculating the activity actj=min(var1, var2, var3, var4, var5, var6, var7, var8);

- calculating the normalized activity $\text{N\_actj} = \dfrac{2 * \text{actj} + \text{mean\_actj}}{\text{actj} + 2 * \text{mean\_actj}}$, where mean_actj is the mean of the activity actj referred to the preceding coded frame.

The calculation of the activity on the source macroblock MBq(i,j) implies a remarkable computational complexity, and has non negligible influence on costs.

The article by Tae-Yun Chung et al. "Quantization control for improvement of image quality compatible with MPEG2", IEE Trans. on Consumer Electronics, US, IEEE Inc. New York, Vol. 40, No. 4, 1 November 1994, pages 821-825, discloses a formula for calculating the activity of a block using coefficients in the DCT domain.

OBJECT AND SUMMARY OF THE INVENTION

It has been found and is the object of the present invention a novel method for calculating the activity of a macroblock of video picture which operates entirely in the direct cosine transform domain of a component of the signal of MBe(i,j), and permits a remarkable reduction of the computational complexity. Moreover the efficiency of quantization on the luminance and chrominance components that is carried out on each picture fed to the coder, whose temporal redundancy has been eventually removed and returned in the spatial frequency domain by means of discrete cosine transform, is markedly increased.

The method of the invention consists in carrying out a filtering of the DCT coefficients of each prediction error block by means of an appropriate frequency response mask. Afterwards the value of such response is averaged on the four blocks composing the luminance component of the DCT transformed macroblock to obtain the activity coefficient. It is not necessary to make any distinction on the frame or half-frame type of content because such a choice has been already done on the data before the dct transform.

The method of the invention defined in claim 1.

BRIEF DESCRIPTION OF THE DRAWINGS

Figure 1 is a block diagram of a MPEG2 video coder;

Figure 2 is a diagram of the block "rate control" of figure 1;

Figure 3 shows the position of a certain macroblock on the picture and the scanning directions;

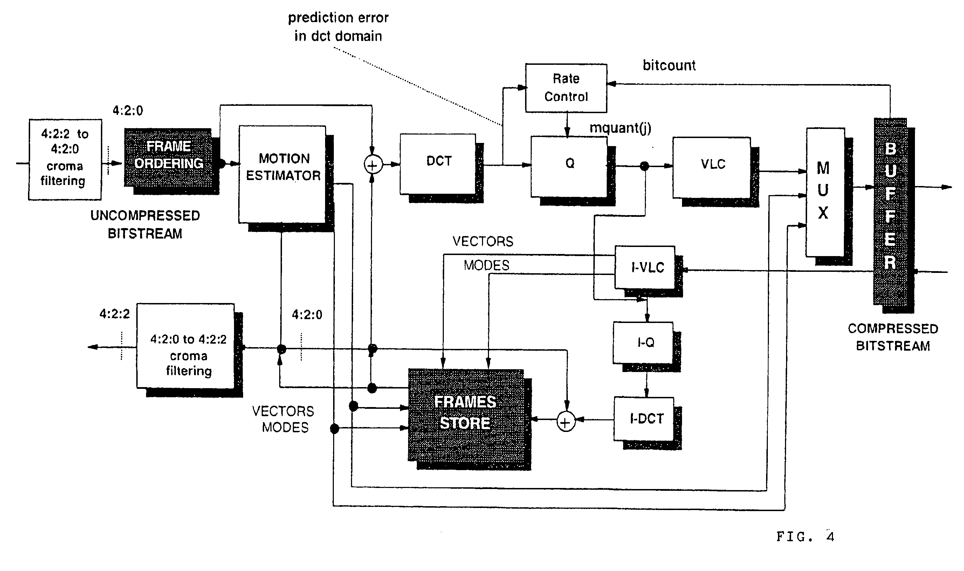

Figure 4 is a block diagram of a MPEG2 video coder modified for implementing the method of the invention;

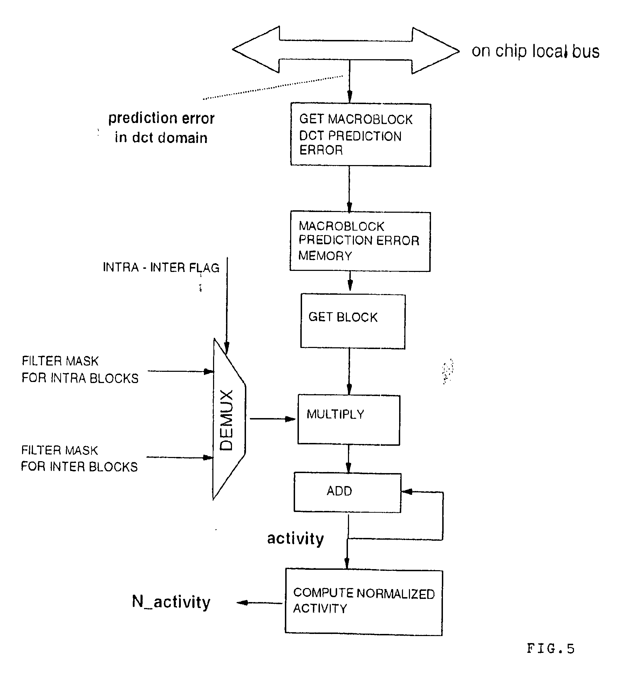

Figure 5 is a block scheme of implementation of the algorithm of the invention.

DESCRIPTION OF AN EMBODIMENT OF THE INVENTION

Referring to the MPEG2 standard and assuming to operate on the luminance component of the video signal, the method of the invention, according to a preferred embodiment, consists of the following steps:

- taking a certain macroblock in the discrete cosine transform domain, essentially before the respective quantization (GET MACROBLOCK DCT PREDICTION ERROR block), and storing it in a 16* 16 words memory with 16 bits per each word;

- reading from said memory each of the four blocks constituting the DCT luminance component obtaining their respective 64 coefficients;

- multiplying the absolute values of said coefficients by a set of values (mask) composed of a number of values (words) smaller than the number of words constituting the block. Said mask is selected between two different masks, the first being dedicated to macroblocks of intra kind (I) and the second mask to macroblocks of non intra kind (P or B);

- summing said products to produce an activity coefficient;

- repeating the above procedure for the remaining blocks of the macroblock being processed;

- calculating the coefficient actj as the sum of the four activity coefficients produced;

- calculating the normalized activity as $N\_actj = \dfrac{2 * actj + mean\_actj}{actj + 2 * mean\_actj}$.

The remarkable improvement in terms of computational complexity achieved by the new method, according to a typical but not limiting example of application to an MPEG coder, is analyzed hereinbelow.

Let us consider a typical method based on the calculation of the variance. As described before, the variance formula is:

$$\sum_{1\ldots64} p_i \cdot p_i - \left[\sum_{1\ldots64} p_i\right]^2$$

which implies 65 multiplications and 126 sums per spective block.

The new method of the invention is based on the calculation of the activity in the spatial frequency domain of the DCT and is applied to a number of coefficients per mask remarkably lower than 64, e.g. 15 and 20 for I blocks and P/B blocks, respectively.

The formula of the coefficient for blocks of I kind is•

$$\text{coeff\_frequency\_domain} = \sum_{1\ldots15} \text{frequency\_mask}_i \cdot p_i$$

The formula of the coefficient for blocks of P or B kind is•

$$\text{coeff\_frequency\_domain} = \sum_{1\ldots20} \text{frequency\_mask}_i \cdot p_i$$

This implies respectively 15 (20) multiplications and 14 (19) sums.

The objective of strongly reducing the computational complexity is therefore abundantly reached.

## Claims

1. A method of measuring the activity of a macroblock of a picture in the direct cosine transform domain of values assumed by a selected component of the video signal **characterized in that** it comprises

   a) separately storing in a memory blocks of data into which is divided a macroblock in the discrete cosine transform domain before quantization;
   b) reading from said memory the data of each of the blocks constituting said macroblock representing said selected component in the discrete cosine transform domain obtaining the respective coefficients;
   c) multiplying the absolute value of said coefficients by a selected mask of weights;
   d) summing the results of said multiplications producing an activity coefficient for each of the blocks constituting said macroblock;
   e) calculating a first activity coefficient of the macroblock actj as the sum of said activity coefficients produced for each block;
   f) calculating a normalized activity value of the macroblock as the ratio between the sum of the double of said activity coefficient actj with a mean activity mean_actj relative to the preceding coded frame and the sum of the double of the coefficient mean_actj with the activity coefficient actj,

   **characterized in that**
   said mask has a number of weights smaller than the number of said respective coefficients constituting the block;
   the activity coefficient is the sum of only said multiplications.

2. The method according to claim 1 in which said mask at paragraph c) is chosen among a group of different masks for each macroblock.

**3.** The method according to claim 1 embodied in an MPEG standard coder, wherein said mask is selected between two different masks, a first mask of 15 weights dedicated to macroblocks of intra kind (I) and a second mask of 20 weights dedicated to macroblocks of non intra kind (P, B).

**Patentansprüche**

**1.** Verfahren zum Messen der Aktivität eines Makroblocks eines Bildes im direkten Kosinustransformationsbereich von Werten, die eine ausgewählte Komponente des Videosignals annimmt, **dadurch gekennzeichnet, daß** es aufweist:

a) getrenntes Speichern von Datenblöcken, in die ein Makroblock im diskreten Kosinustransformationsbereich vor der Quantisierung zerlegt wird, in einem Speicher;
b) Lesen der Daten jedes der Blöcke, die den Makroblock bilden, die die ausgewählte Komponente im diskreten Kosinustransformationsbereich repräsentieren, aus dem Speicher, wobei die jeweiligen Koeffizienten erhalten werden;
c) Multiplizieren des Absolutwerts der Koeffizienten mit einer ausgewählten Maske von Gewichten;
d) Summieren der Resultate der Multiplikationen, wobei ein Aktivitätskoeffizient für jeden der Blöcke erzeugt wird, die den Makroblock bilden;
e) Berechnen eines ersten Aktivitätskoeffizienten des Makroblocks actj als die Summe der Aktivitätskoeffizienten, die für jeden Block erzeugt werden;
f) Berechnen eines normierten Aktivitätswerts des Makroblocks als das Verhältnis zwischen der Summe des Doppelten des Aktivitätskoeffizienten actj mit einer mittleren Aktivität mean_actj relativ zum vorhergehenden codierten Rahmen und der Summe des Doppelten des Koeffizienten mean_actj mit dem Aktivitätskoeffizienten actj.

**dadurch gekennzeichnet, daß**
die Maske eine Anzahl von Gewichten aufweist, die kleiner als die Anzahl der jeweiligen Koeffizienten ist, die den Block bilden; der Aktivitätskoeffizient die Summe nur der Multiplikationen ist.

**2.** Verfahren nach Anspruch 1, in dem die Maske bei Absatz c) aus einer Gruppe unterschiedlicher Masken für jeden Makroblock ausgewählt wird.

**3.** Verfahren nach Anspruch 1, das in einem Codierer des MPEG-Standards ausgeführt wird, wobei die Maske zwischen zwei unterschiedlichen Masken ausgewählt wird, einer ersten Maske von 15 Gewichten, die Makroblöcken einer Intra-Art (I) zugeordnet ist, und einer zweiten Maske von 20 Gewichten, die Makroblöcken einer Nicht-Intra-Art (P, B) zugeordnet ist.

**Revendications**

**1.** Procédé de mesure de l'activité d'un macrobloc d'une image dans le domaine de transformation en cosinus directe de valeurs prises par une composante sélectionnée du signal vidéo, **caractérisé en ce qu'**il comprend :

a) mémoriser séparément dans une mémoire des blocs de données en lesquels est divisé un macrobloc dans le domaine de transformation en cosinus discrète avant une quantification ;
b) lire dans ladite mémoire les données de chacun des blocs constituant ledit macrobloc représentant la composante sélectionnée dans le domaine de transformation en cosinus discrète pour obtenir les coefficients respectifs ;
c) multiplier la valeur absolue desdits coefficients par un masque choisi de pondérations ;
d) ajouter les résultats des multiplications ce qui produit un coefficient d'activité pour chacun des blocs constituant le macrobloc ;
e) calculer un premier coefficient d'activité du macrobloc (actj) en tant que somme des coefficients d'activité produits pour chaque bloc ;
f) calculer une valeur d'activité normalisée du macrobloc en tant que rapport entre la somme du double dudit coefficient d'activité (actj) avec une activité moyenne (mean actj) relative à la trame codée précédente et la somme du double du coefficient mean_actj avec le coefficient d'activité actj ;

**caractérisé en ce que** :

ledit masque comporte un nombre de pondérations inférieur au nombre desdits coefficients respectifs constituant le bloc ;
le coefficient d'activité est la somme de seulement lesdites multiplications.

2. Procédé selon la revendication 1, dans lequel le masque du paragraphe c) est choisi dans un groupe de masques différent pour chaque macrobloc.

3. Procédé selon la revendication 1, mis en oeuvre dans un codeur à la norme MPEG, dans lequel le masque est choisi entre deux masques différents, un premier masque de 15 pondérations dédié à des macroblocs de type intra (I) et un deuxième masque de 20 pondérations dédié à des macroblocs de type non intra (P, B).

FIG. 1

FIG. 2

FIG. 3

FIG. 4

FIG.5

**EP 1 083 751 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 98830599 A

- EP 97830591 A

**Non-patent literature cited in the description**

- **TAE-YUN CHUNG et al.** Quantization control for improvement of image quality compatible with MPEG2. *IEE Trans. on Consumer Electronics,* 01 November 1994, vol. 40 (4), 821-825